# EUROPÄISCHE PATENTSCHRIFT

(11) **EP 1 313 787 B1**
(45) Veröffentlichungstag und Bekanntmachung des Hinweises auf die Patenterteilung: **12.05.2004**
(21) Anmeldenummer: 01971661.2
(22) Anmeldetag: 30.08.2001
(51) Int. Cl.: C08G 63/668, C11D 3/37

(54) **FLIESSFÄHIGE, AMPHIPHILE UND NICHTIONISCHE OLIGOESTER**
FREE-FLOWING, AMPHIPHILIC, NON-IONIC OLIGOESTERS
OLIGOESTERS NON IONIQUES, AMPHIPHILES ET A ECOULEMENT LIBRE

(30) Priorität: 02.09.2000 DE 10043604
(43) Veröffentlichungstag der Anmeldung: 28.05.2003
(73) Patentinhaber: SASOL Germany GmbH, 20537 Hamburg (DE)
(72) Erfinder: KOCH, Herbert, 46348 Raesfeld (DE); SCHOENKAES, Udo, 45721 Haltern (DE)
(74) Vertreter: Schupfner, Georg U.
(86) Internationale Anmeldenummer: PCT/DE2001/003293
(87) Internationale Veröffentlichungsnummer: WO 2002/018474

(56) Entgegenhaltungen:
- EP-A- 0 752 468
- DE-A- 19 735 715
- DE-A- 19 826 356

## Beschreibung

Gegenstand der Erfindung sind bei Raumtemperatur fließfähige, amphiphile, nichtionische Oligoester hergestellt durch Umsetzung von Dicarbonsäure-Verbindungen, Polyol-Verbindungen, wasserlöslichen Alkylenoxid-Anlagerungsprodukten und ggf. Diol-Verbindungen, darüber hinaus Reinigungsformulierungen und Konzentrate enthaltend oben bezeichnete Oligoester und die Verwendung der Oligoester als Additiv in Reinigungsmitteln, insbesondere zur Reinigung harter Oberflächen.

Moderne Wasch- und Reinigungsmittelformulierungen unterliegen einem ständigen Prozess der Leistungsoptimierung. Dabei gilt grundsätzlich das Prinzip: "Höhere Wasch-/ Reinigungsperformance bei gleicher oder niedrigerer Einsatzkonzentration". Diesem Trend wird u.a. Rechnung getragen durch die Entwicklung und den Einsatz von Additiven, die schon bei geringer Einsatzkonzentration die Reinigungsleistung der Rezepturen verstärken. Dabei besteht insbesondere Bedarf an Additiven, die sich durch Multifunktionalität auszeichnen und eine Darreichungsform aufweisen, die eine leichte Verarbeitung in den modernen Wasch- und Reinigungsmitteln gewährleistet.

Es ist eine Vielzahl unterschiedlicher Poly- und Oligoesterverbindungen als sogenannte "Soil-Release-/Soil-Repellent - Polymere" bekannt. Aufgabe dieser Verbindungen ist es, zu verhindern, daß abgelöste Schmutzstoffe sich wieder auf dem Gewebe absetzen und somit zu einer Vergrauung führen. Unter diesen sind auch vernetzte amphiphile Oligoesterverbindungen, welche trifunktionelle bzw. höherfunktionelle Monomerbausteine enthalten, bekannt.

Aus der EP 0 752 468-A2 sind wasserlösliche Copolymere mit Soil-Release-Eigenschaften bekannt, die als Monomereinheiten Polyethylenglykole und/oder verschlossene Polyethylenglykole, eine oder mehrere aromatische, ggf. sulfonierte, Dicarbonsäuren und mindestens 30 mol% eines Polyols mit mindestens 3 Hydroxylgruppen enthalten. Die in der EP 0 752 468-A2 beschriebenen Produkte sind wachs- oder harzartige Feststoffe.

Die EP 0 442 101-B1 offenbart Polyester, die erhältlich sind durch Kondensation von
a.) Carbonsäuren mit mind. 2 Carboxylgruppen, deren Estern, Anhydriden oder Mischungen
b.) Glycerin, Pentaerythrit, Oligoglycerin und/oder Additionsprodukten von 1 bis 5 mol mindestens eines Alkylenoxids mit 2 bis 3 C-Atomen an 1 mol der genannten Alkohole, sowie
c.) wasserlöslichen Anlagerungsprodukten von 5 bis 80 mol mindestens eines Alkylenoxids an 1 mol C₈-C₂₄-Alkohol, C₆-C₁₈ Alkylphenol oder C₈-C₂₄ Alkylamin.

Die beschriebenen Polyester sind wachsartig fest und werden als vergrauungsinhibierende und schmuizablösungsfördernde Zusätze zu pulverförmigen und flüssigen Waschmittelformulierungen eingesetzt.

WO 99/09125-A1 beschreibt amphiphile Polymere auf Basis von Polyestern mit einkondensierten acetalischen Gruppen, die bei Raumtemperatur flüssig sind, sowie ihren Einsatz in Wasch- und Reinigungsmitteln.

Aus DE 198 26 356-A1 sind Oligoester als schmutzablösende Wäschereinigungsmittel bekannt, die durch Polykondensation von
(a) 40 bis 52 mol% einer oder mehrerer Dicarbonsäuren oder deren Ester
(b) 10 bis 40 mol% Ethylenglykol und/oder Propylenglykol
(c) 3 bis 20 mol% Polyethylenglykol
(d) 0,5 bis 10 mol% eines wasserlöslichen Anlagerungsproduktes von 5 bis 80 mol eines Alkylenoxids an 1 mol C₁-C₂₄-Alkohol, C₆-C₁₈-Alkylphenol oder C₈-C₂₄ Alkylamin sowie
(e) 0,4 bis 10 mol% eines oder mehrerer Polyole mit 3 bis 6 Hydroxylgruppen erhalten werden. Gemäß Beispiel 1 der DE 198 26 356-A1 sind die erhältlichen Oligoester Feststoffe.

Merkmal der bekannten Soil-Release-/Soil-Repellent-Polymere ist ihre Wirksamkeit bei der Faserreinigung, insbesondere bei der Reinigung von Polyester-/ Polyamidgeweben bzw. deren Mischungen mit Baumwolle. Die Wirkungsweise beruht im wesentlichen auf einer Modifizierung der hydrophoben Faseroberfläche mit Hilfe des hydrophilierenden Polymers.

Der Feuchtigkeitstransport (Wasserabsorption und Saugfähigkeit) wird bei den mit dem Soil-Release-Polymer behandelten hydrophoben Geweben, wie Polyester-, Polyamidgewebe oder deren Mischungen mit Baumwolle, erheblich verbessert. Außerdem verleihen die Polymere den Stoffen antistatische und Gleiteigenschaften, wodurch die Handhabung dieser Fasern in der Textilverarbeitung erleichtert wird. Die Behandlung des Gewebes mit dem Soil-Release-Polymer ist als eine Art Imprägnierung zu verstehen, d.h. das Schmutzlösepolymer verbleibt für mehrere Waschcyclen auf der Faser.

Die bekannten Poly-/Oligoester haben den Nachteil, dass sie nur eine geringe Wirkung als Additiv in Formulierungen zur Reinigung harter Oberflächen, wie z.B. Kunststoffe, Metall, Glas, Keramik etc. besitzen. Weiterhin liegen viele der Produkte als Feststoffe vor. Dies erschwert die Einarbeitung der Oligoester in Formulierungen zur Reinigung harter Oberflächen, die im Regelfall flüssig, pastös oder gelartig vorliegen.

Ein weiterer Nachteil der bekannten amphiphilen Oligoester ist ihre geringe physikalische Stabilität in flüssigen oder gelartigen Formulierungen. Diese führt im wesentlichen zum Absetzen von Feststoffpartikeln in der fertigen Reinigungsformulierung. Zum Teil werden die amphiphilen Oligoester als wässrige Dispersionen angeboten mit den Nachteilen eines geringen Aktivgehaltes von < 20%, sowie der Separation von Feststoffpartikeln während der Lagerung der wässrigen Dispersionen.

Der Erfindung liegt die Aufgabe zugrunde, Verbindungen der eingangs beschriebenen Art zur Verfügung zu stellen, die die genannten Nachteile nicht aufweisen und insbesondere die Fähigkeit besitzen, die Reinigungsleistungen von Formulierungen zur Reinigung harter Oberflächen zu verbessern.

Die Aufgabe wird erfindungsgemäß gelöst durch bei Raumtemperatur fließfähige, amphiphile und nichtionische Oligoester, dadurch gekennzeichnet, dass die Oligoester durch Umsetzung, vorzugsweise Polykondensation, von
(A) 20 bis 50 mol% , vorzugsweise 30 bis 40 mol%, einer oder mehrerer Dicarbonsäure-Verbindungen,
(B) 10,1 bis 29,9 mol% , vorzugsweise 15 bis 29 mol%, einer oder mehrerer Polyol-Verbindungen mit mindestens 3 OH-Gruppen,
(C) 10,1 bis 50 mol% , vorzugsweise 20 bis 40 mol%, eines oder mehrerer wasserlöslicher Alkylenoxid-Anlagerungsprodukte eines oder mehrer C₂- bis C₄- Alkylenoxide an einen C₁- bis C₆- Alkohol im Molverhältnis 4 bis 100 Mol, vorzugsweise 4 bis 30 Mol, Alkylenoxid , zu 1 Mol Alkohol und ggf.
(D) ggf. 0 bis 30 mol%, vorzugsweise 0,1 bis 30 mol%, einer oder mehrerer Diol-Verbindungen
hergestellt sind. Die obigen Angaben in mol% gelten abschließend und jeweils unabhängig voneinander und nehmen Bezug auf die Summe der Komponenten (A) bis (D). Der Oligoester ist hergestellt unter Verwendung von im wesentlichen keiner weiteren Komponente.

Bevorzugte Ausführungsformen sind Gegenstand der Unteransprüche.

Die Angabe "bei Raumtemperatur" steht für Temperaturen von 15 bis 25 °C, insbesondere 20°C. Fließfähig heißt bei Raumtemperatur unter der eigenen Schwerkraft fließend. Verbindungen im Sinne des Hauptanspruchs der vorliegenden Erfindung sind organische Verbindungen die neben Kohlenstoff, Wasserstoff und Sauerstoff nach Umsetzung, d.h. Einbau in das Oligomer, keine weiteren Atome aufweisen. Dies bedeutet etwa, daß die Dicarbonsäure-Verbindungen nach Einbau in den Oligoester neben Carboxyl-Gruppen, auch Carbonyl- oder Hydroxy-Gruppen tragen können, aber z.B. keine Sulfonyl- oder Halogengruppen aufweisen.

Als Dicarbonsäure-Verbindung (A) können aliphatische und/oder aromatische Dicarbonsäuren bzw. deren Ester oder Anhydride eingesetzt werden. Die Dicarbonsäure-Verbindungen weisen - bezogen auf die Dicarbonsäure bzw. Dicarbonsäure-Gruppe - vorzugsweise 3 bis 40 Kohlenstoffatome auf. Aromatische Dicarbonsäure-Verbindungen können erfindungsgemäß insbesondere Terephthalsäure, Isophthalsäure, Phthalsäure, deren Mono- und Dialkylester mit C₁- bis C₅-Alkoholen, wie z.B. Dimethylterephthalat sein, wobei auch Gemische dieser Verbindungen möglich sind. Beispiele für aliphatische Dicarbonsäure-Verbindungen sind Malonsäure-, Bernsteinsäure-, Fumarsäure-, Maleinsäure-, Glutarsäure-, Adipinsäure-, Pimelinsäure-, Korksäure-, Azelainsäure- und Sebacinsäure-dialkylester. Besonders bevorzugt werden Terephthalsäure, Isopthalsäure und Phthalsäure sowie deren Dimethyl-, Diethyl-, Dipropyl- und Dibutylester eingesetzt.

Die Polyol-Verbindungen (B) weisen vorzugsweise 3 bis 12 Kohlenstoffatome auf. Als Beispiele für die Polyol-Verbindungen (B) mit mindestens 3 OH-Gruppen sind , zu nennen: Pentaerythrit, Trimethylolethan, Trimethylolpropan, 1,2,3-Hexantriol, Sorbit, Mannit, Mono-, Di- und Triglycerin, 1,2,3-Butantriol, 1,2,4-Butantriol. Bevorzugt ist dabei der Einsatz von Glycerin.

Beispiele für Alkylenoxid-Anlagerungsprodukte (C) sind Anlagerungsprodukte von Ethylenoxid, Propylenoxid, Butylenoxid bzw. deren Mischungen an aliphatische C₁bis C₆- Alkohole wie Methanol, Ethanol, Propanol oder Butanol. Bevorzugt sind Anlagerungsprodukte von Ethylenoxid an Methanol.

Als Diol-Verbindung (D) können erfindungsgemäß beispielsweise Ethylenglykol, 1,2- bzw. 1,3-Propylenglykol, Neopentylglykol, 1,2-Butylenglykol, 3-Methoxy-1,2-propylenglykol sowie deren Dimere und Trimere eingesetzt werden. Die Diol-Verbindung (D) weist vorzugsweise 2 bis 20 Kohlenstoffatome auf. Grundsätzlich sind auch Mischungen verschiedener Diole möglich. Bevorzugt ist der Einsatz von Ethylenglykol und/oder Propylenglykol.

Die Synthese der Oligoester kann in Form einer direkten Umsetzung aller Monomerbausteine in einem Schritt erfolgen, so dass statistische Polymere erhalten werden. Eine andere Herstellungsweise ist eine Mehrschrittsynthese z.B. derart; dass eine Vorkondensation verschiedener Bausteine erfolgt.

Grundsätzlich werden bei der Synthese Temperaturen von ca. 80 bis 350 °C und Drücke von Normaldruck bis kleiner 1 mbar eingestellt. Vorzugsweise wird die Kondensation in dem Temperaturbereich von 150 bis 280 °C in Gegenwart der üblichen Polykondensations- und Umesterungskatalysatoren durchgeführt. Dabei können die gewichtsmittleren Molmassen der erzeugten Polymere gezielt eingestellt werden. Diese liegen vorzugsweise zwischen 2000 und 5000 g/mol.

Als Katalysatoren eignen sich in der Literatur beschriebene Verbindungen. Werden als Dicarbonsäure-Verbindung (A) die freien Dicarbonsäuren oder die Anhydride verwendet, so ist p-Toluolsulfonsäure der bevorzugte Katalysator. Für Dicarbonsäuredialkylester als Dicarbonsäure-Verbindung (A) werden die üblichen Umesterungskatalysatoren, wie beispielsweise Zinkacetat, Mischungen aus Calciumacetat und Antimonoxid, Stannane oder Tetraalkoxytitanate, wie Titantetraisobutanolat oder Titantetraisopropanolat eingesetzt.

Die Kondensation kann in Gegenwart von Antioxidantien durchgeführt werden, z.B. von substituierten Phenolen, wie beispielsweise 2,5-Ditertiärbutylphenol, 2-Methylcyclohexyl-4,6-dimethylphenol, phosphoriger Säure oder anderen üblicherweise hierfür verwendeten Antioxidantien. Diese Verbindungen verhindern oxidative Verfärbungen der Polyester während der Kondensation.

Soweit die Farbe der erfindungsgemäßen Oligoester weiterhin nicht zufriedenstellend ist, können diese einer Nachbehandlung unterzogen werden. Eine übliche Nachbehandlung ist beispielsweise eine Bleichung mit Wasserstoffperoxid, die zu einer deutlichen Farbaufhellung führt.

Die erfindungsgemäßen Oligoester können in unterschiedlicher Weise in Reinigungsmitteln eingesetzt werden. Sie sind bei Raumtemperatur fließfähig und können ohne weitere Bearbeitung als Additiv in die Reinigungsmittelprodukte eingebracht werden. So können zum Beispiel die Oligoester durch Einrühren bzw. Eindispergieren in flüssige oder gelförmige Reiniger eingearbeitet werden.

Grundsätzlich können diese Verbindungen auch in Form einer Matrix eingesetzt werden. Unter Matrix ist hierbei die Abmischung der Oligoester mit z.B.
- nichtionischen Tensiden, wie z.B. Alkoholethoxylaten, Alkoholpropoxylaten, gemischten Alkoholalkoxylaten, Alkylpolyglucosiden, Glukoseamiden,
- Polyethylenglykolen, Polypropylenglykolen, gemischten Polyalkylenglykolen,
- Lösungsmitteln wie Isopropanol, Propylenglykol, Glykolether, Wasser etc. zu verstehen.

Durch die Abmischung bzw. die Konfektionierung mit anderen Produkten können z.B. noch besser fließfähige Produkte niedriger Viskosität erhalten werden.

Die erfindungsgemäßen Oligoester können auch auf Trägermaterialien, wie z.B. Zeolithe, Phosphate, Citrate, Natriumsulfat, etc. aufgebracht werden und dadurch z.B. in rieselfähige pulverförmige Compounds überführt werden. Derartige Cömpounds können vorteilhaft in pulverförmigen Reinigern, granulatförmigen Reinigern, und extrudierten und festen Reinigungsmassen eingesetzt werden.

Dabei erweist es sich als vorteilhaft, Produkte einzusetzen, die generell Formulierungs-Bestandteil der Reinigungsformulierungen darstellen.

Die erfindungsgemäßen Oligoester können in einer Vielzahl von Wasch- und Reinigungsmitteln eingesetzt werden. Die Oligoester weisen eine gute Verträglichkeit mit marktüblichen Reinigungsmittelformulierungen auf. Die Einsatzkonzentration an Oligoester in den Formulierungen beträgt vorzugsweise 0,01 bis 20 Gew.%, besonders bevorzugt 0,1 bis 5 Gew.%. Durch den Zusatz der erfindungsgemäßen Produkte wird die Reinigungsleistung gesteigert und die Neigung zur Wiederanschmutzung der gereinigten Oberfläche verringert.

Bei den Reinigungsmitteln kann es sich um stark schäumende Einstellungen handeln, oder um schaumarme Reinigungsmittel, wie sie häufig in technischen Reinigerprodukten vorliegen. Die Formulierungen können zur manuellen und maschinellen Reinigung verwendet werden.

Die erfindungsgemäßen Formulierungen können z.B. als Reiniger für harte Oberflächen in Haushalt und Gewerbe eingesetzt werden.

Neutrale Formulierungen werden z.B. als Allzweckreiniger im Haushalt oder zur Reinigung von Fahrzeugen verwendet. Saure Einstellungen, die u.a. kalklösende Wirksamkeit haben, werden z.B. im Sanitärbereich oder als Badreiniger eingesetzt, während alkalische Formulierungen beispielsweise als Universal-, Fußboden- und Glasreiniger Anwendung finden. Vorzugsweise beträgt der pH-Wert der Zusammensetzung bzw. Formulierung, in der die erfindungsgemäßen Oligoester eingesetzt werden, 3 bis 9.

Weitere Beispiele für die erfindungsgemäßen Reinigungsmittel für harte Oberflächen sind z.B. Reiniger für Kunststoffoberflächen, Computergehäusereiniger, Autound Felgenreiniger, LKW-Planenreiniger, flüssige, gelförmige und blockförmige WC-Reiniger und Möbelpolituren.

Die Oligoester können auch als Additive in textilen Reinigungsmitteln, wie Vollwaschmitteln, Feinwaschmitteln, Gardinenwaschmitteln, Colorwaschmitteln, Teppichreinigungsmitteln, Imprägniermitteln, etc. eingesetzt werden.

Darüber hinaus können die Oligoester auch in Wäscheweichspülmitteln eingesetzt werden. Der Zusatz der Produkte zu den Wäscheweichspülern, die üblicherweise hauptsächlich kationische Tenside enthalten, verbreitert das Wirkungsspektrum des Weichspülproduktes, da die kationischen Tenside bevorzugt auf natürlichen Textilfasern, wie z.B. Baumwollgewebe, wirken. Die erfindungsgemäßen Oligoester erweitern das Wirkungsspektrum auf synthetische Fasermaterialien, insbesondere polyesterhaltigen Gewebearten. Die nichtionischen Oligoester weisen eine gute Verträglichkeit mit kationischen Weichspülerrohstoffen auf und können daher gemeinsam in der Wäschenachbehandlung und Wäschepflege eingesetzt werden.

### Beispiel 1

In einem 2 1 Mehrhalskolben mit Glasrührer, Heizbad, Schutzgaseinleitung, Destillationsaufsatz, Füllkörperkolonne, Destillationsbrücke, Vakuumverteiler, Destillationskolben, Kühlfalle und Innenthermometer wurden insgesamt 640 g (1,45 mol) Polyethylenglykolmonomethylether mit einem gewichtsmittleren Molekulargewicht von ca. 440 g/mol (MARLIPAL® 1/12 der CONDEA Chemie GmbH), 388 g (2,0 mol) Dimethylterephthalat, 110,5 g (1,2 mol) Glycerin, 145,8 g (1,4 mol) Neopentylglykol, 1,0 g 2,6-Di-tert.-butyl-p-kresol (Ionol® von Shell) sowie 1 ml Tetraisopropylorthotitanat unter Schutzgas vorgelegt.

Die Reaktionsmischung wurde langsam bis auf Temperaturen von 150 bis 220 °C aufgeheizt und das gebildete Methanol aufgefangen. Nachdem der größte Teil der theoretisch zu erwartenden Methanolmenge aufgefangen war, wurde die Reaktionsmischung abgekühlt, die Kolonne ausgebaut, Vakuum angelegt und die Mischung wieder bis auf maximal 230°C aufgeheizt. Das bei der Reaktion nicht umgesetzte Diol-/Polyolgemisch wurde dabei als Destillat aufgefangen.

Nachdem der Oligoester eine Hydroxylzahl von ca. 90 mg KOH/g Substanz erreicht hatte, wurde die Reaktion abgebrochen. Das Produkt lag als gelbes, niedrigviskoses Öl vor.

### Beispiel 2

In Analogie zu Beispiel 1 wurden insgesamt 883 g (2,0 mol) Polyethylenglykolmonomethylether mit einem gewichtsmittleren Molekulargewicht von ca. 440 g/mol (MARLIPAL® 1/12 der CONDEA Chemie GmbH), 534 g (2,75 mol) Dimethylterephthalat, 227,9 g (2,5 mol) Glycerin, 68,3 g (1,1 mol) Monoethylenglykol, 1,0 g 2,6-Di-tert.-butyl-p-kresol (Ionol® von Shell) sowie 1 ml Tetraisopropylorthotitanat zur Reaktion gebracht.

Nachdem der Oligoester eine Hydroxylzahl von 112 mg KOH/g Substanz erreicht hatte; wurde die Reaktion abgebrochen. Das Produkt lag als gelbes, niedrigviskoses Öl vor.

### Beispiel 3

In Analogie zu Beispiel 1 wurden insgesamt 1168 g (2,65 mol) Polyethylenglykolmonomethylether mit einem gewichtsmittleren Molekulargewicht von ca. 440 g/mol (MARLIPAL® 1/12 der CONDEA Chemie GmbH), 437 g (2,25 mol) Dimethylterephthalat, 165,8 g (1,8 mol) Glycerin, 1,0 g 2,6-Di-tert.-butyl-pkresol (Ionol® von Shell) sowie 1 ml Tetraisopropylorthotitanat zur Reaktion gebracht.
Nachdem der Oligoester eine Hydroxylzahl von 68 mg KOH/g Substanz erreicht hatte, wurde die Reaktion abgebrochen. Das Produkt lag als gelbes Öl vor.

### Beispiel 4

In Analogie zu Beispiel 1 wurden insgesamt 800,0 g (1,8 mol) Polyethylenglykolmonomethylether mit einem gewichtsmittleren Molekulargewicht von ca. 440 g/mol (MARLIPAL® 1/12 der CONDEA Chemie GmbH), 485,5 g (2,5 mol) Dimethylterephthalat, 184,2 g (2,0 mol) Glycerin, 95,1 g (1,25 mol) 1,2-Propylenglykol, 1,0 g 2,6-Di-tert.-butyl-p-kresol (Ionol® von Shell) sowie 1 ml Tetraisopropylorthotitanat zur Reaktion gebracht.

Nachdem der Oligoester eine Hydroxylzahl von 106 mg KOH/g Substanz erreicht hatte, wurde die Reaktion abgebrochen. Das Produkt lag als gelbes, viskoses Öl vor.

### Beispiel 5: Reinigungsleistung an harten Oberflächen

Die Reinigungsleistung wurde entsprechend der Prüfmethode des Industrieverbandes Putz- und Pflegemittel zur Gebrauchswertbestimmung von Allzweckreinigern bestimmt (Qualitätsnorm des Industrieverbandes Putz- und Reinigungsmittel e.V. (IPP), Frankfurt a.M.; Qualitätsnorm für Fußbodenpflege und Fußbodenreinigungsmittel; Seifen Öle Fette Wachse, 112(10)1986). Bei diesem Scheuertest wird eine testverschmutzte Kunststofffolie mit Hilfe eines Schwämmchens, das mit der Reinigungslösung getränkt ist, unter definierten Bedingungen gewischt. Die Prüfkonzentration betrug 1 g Tensid/l Reinigungslösung. Der IPP-Testschmutz war eine Mischung aus Benzin, Öl und Rußpigmenten. Durch die Reinigungsprozedur wurde der Schmutz von der Kunststoffoberfläche entfernt. Der Reinigungseffekt wurde mit Hilfe eines Farbmessgerätes als Aufhellung gegen den unbehandelten weißen Schmutzträger ermittelt.

Die Reinigungsleistung der marktgängigen Allzweckreiniger APC Marktprodukt I und APC Marktprodukt II und der APC Formulierung III wurde mit Hilfe des Scheuertests ermittelt. Dann wurden den Reinigungsprodukten die erfindungsgemäßen Oligoester in Konzentrationen von 0,5; 1,0 bzw. 1,5 Gew.% (bezogen auf die Gesamtformulierung) zugesetzt und erneut die Reinigungsleistung bestimmt. Es wurden Mehrfachbestimmungen ausgeführt und die Mittelwerte berechnet.

### APC Marktprodukt I

### Der GENERAL® Bergfrühling (UBA 0416 4747)

Allzweckreiniger auf Basis Alkoholethersulfat, Alkohol-EO-PO, Seife und Isopropanol. WAS (waschaktive Substanz) -Gehalt: 9.5 Gew.%

| *Oligoester* | | *Oligoester* | |
|---|---|---|---|
| *Beispiel 2* *in Gew.%* | *Aufhellung* *in %* | *Beispiel 3* *in Gew.%* | *Aufhellung* *in %* |
| - | 57 | - | 57 |
| 0,5 | 65 | 0,5 | 68 |
| 1,0 | 76 | 1,0 | 75 |
| 1,5 | 79 | 1,5 | 78 |

Durch den Zusatz der erfindungsgemäßen Oligoester konnte die Reinigungsleistung signifikant gesteigert werden. Dagegen bewirkte der Zusatz des Handelsproduktes ZELCON® 5126 (1 Gew.% Polymer, Hersteller: DuPont) zu APC Marktprodukt I keine Verbesserung der Aufhellung.

### APC Marktprodukt II

### Meister PROPER ® (UBA 0673 3121 )

Allzweckreiniger auf Basis Fettalkoholsulfat, Alkoholethoxylat, Cumolsulfonat, Citrat und Isopropanol. WAS- Gehalt: 8 Gew.%

| *Oligoester* | | *Oligoesfer* | |
|---|---|---|---|
| *Beispiel 2* *in Gew. %* | *Aufhellung* *in %* | *Beispiel 3* *in Gew. %* | *Aufhellung* *in %* |
| - | 50 | - | 50 |
| 0,5 | 54 | 0,5 | 62 |
| 1,0 | 61 | 1,0 | 71 |
| 1,5 | 65 | 1,5 | 75 |

Durch den Zusatz der erfindungsgemäßen Oligoester konnte die Reinigungsleistung signifikant gesteigert werden.

### APC Formulierung III (Angaben in Gew.%)

| | |
|---|---|
| MARLON® A 350 *(LAS-Na, CONDEA Chemie)* | 16,0 % |
| MARLIPAL® 24/70 *(C12-C14-Alkohol-7EO, CONDEA Chemie)* | 8,0 % |
| SERDOLAMIDE® PPF 67 *(Kokosfettsäurediethanolamid, CONDEA Servo)* | 0,5 % |
| Wasser | ad 100 |
| WAS-Gehalt | 16.5 % |
| pH-Wert (unverdünnt) | ca. 8 |

| *Oligoester* | | *Oligoester* | |
|---|---|---|---|
| *Beispiel 2* *in Gew.%* | *Aufhellung* *in %* | *Beispiel 3* *in Gew.%* | *Aufhellung* *in %* |
| - | 53 | - | 53 |
| 0,5 | 55 | 0,5 | 55 |
| 1,0 | 70 | 1,0 | 75 |

Durch den Zusatz der erfindungsgemäßen Oligoester konnte die Reinigungsleistung signifikant gesteigert werden.

### Beispiel 6: Verträglichkeit mit Reinigungsmittelformulierungen

Zur Prüfung der Verträglichkeit wurden die erfindungsgemäßen Oligoester durch Rühren bei Raumtemperatur in Reinigungsmittelprodukte eingearbeitet. Das Aussehen und die Homogenität der Reinigungsmittel wurde direkt nach der Einarbeitung und nach 4-wöchiger Lagerung bei Raumtemperatur beurteilt.

Die Oligoester weisen eine gute Verträglichkeit mit den Reinigungsmittelformulierungen auf . Sie konnten in die Testprodukte APC Marktprodukt I, APC Marktprodukt II und APC Formulierung III homogen und lagerungsstabil eingearbeitet werden.

| Reiniger | Oligoester Einsatzmenge in Gew.% | | Aussehen | |
|---|---|---|---|---|
| | Beispiel 2 | Beispiel 3 | nach Einarbeitung | Nach 4 Wochen Lagerung bei RT |
| APC Marktprodukt I | 0,5 | - | Klar | Klar |
| APC Marktprodukt I | 1,0 | - | Klar | Klar |
| APC Marktprodukt I | 1,5 | - | Klar | Klar |
| | | | | |
| APC Marktprodukt II | 0,5 | - | Klar | Klar |
| APC Marktprodukt II | 1,0 | - | Klar | Klar |
| APC Marktprodukt II | 1,5 | - | Klar | Klar |
| APC Marktprodukt II | - | 0,5 | Klar | Klar |
| APC Marktprodukt II | - | 1,0 | Klar | Klar |
| APC Marktprodukt II | - | 1,5 | Klar | Klar |
| | | | | |
| APC Formulierung III | 0,5 | - | Klar | Klar |
| APC Formulierung III | 1,0 | - | Klar | Klar |
| APC Formulierung III | - | 0,5 | Klar | Klar |
| APC Formulierung III | - | 1,0 | Klar | Klar |

## Patentansprüche

1. Bei Raumtemperatur fließfähige, amphiphile und nichtionische Oligoester, **dadurch gekennzeichnet, dass** die Oligoester durch Umsetzung von
(A) 20 bis 50 mol% einer oder mehrerer Dicarbonsäure-Verbindungen,
(B) 10,1 bis 29,9 mol% einer oder mehrerer Polyol-Verbindungen mit mindestens 3 OH-Gruppen,
(C) 10,1 bis 50 mol% eines oder mehrerer wasserlöslicher Alkylenoxid-Anlagerungsprodukte eines oder mehrer C₂- bis C₄- Alkylenoxide an einen C₁bis C₆- Alkohol im Molverhältnis 4 bis 100 Mol Alkylenoxid zu 1 Mol Alkohol und
(D) 0 bis 30 mol% einer oder mehrerer Diol-Verbindungen
erhältlich sind.

2. Oligoester gemäß Anspruch 1, **dadurch gekennzeichnet, dass** 1 bis 10 mol% der Diol-Verbindung (D) eingesetzt werden.

3. Oligoester gemäß einem der vorhergehenden Ansprüche, **dadurch gekennzeichnet, dass** das Alkylenoxid-Anlagerungsprodukt (C) ein Anlagerungsprodukt von 4 bis 40 mol, vorzugsweise 4 bis 30 Mol, Ethylenoxid an Methanol ist.

4. Oligoester gemäß einem der vorhergehenden Ansprüche, **dadurch gekennzeichnet, dass** die gewichtsmittlere Molmasse des Oligoesters kleiner 5000 g/mol ist.

5. Oligoester gemäß einem der vorhergehenden Ansprüche, **dadurch gekennzeichnet, dass** die gewichtsmittlere Molmasse zwischen 2000 und 5000 g/mol liegt.

6. Oligoester gemäß einem der vorhergehenden Ansprüche, **dadurch gekennzeichnet, dass** die gewichtsmittlere Molmasse des Alkylenoxid-Anlagerungsproduktes (C) kleiner als 500 g/mol ist.

7. Reinigungsformulierung enthaltend 0,01 bis 20 Gew.%, Oligoester gemäß einem der vorhergehenden Ansprüche.

8. Konzentrat enthaltend 50 bis 95% Oligoester gemäß einem der Ansprüche 1 bis 6 und weiterhin eine oder mehrere der nachfolgend genannten Komponenten: nichtionische Tenside, Polyalkylenglykole, Alkylenglykole und Wasser.

9. Verwendung der Oligoester gemäß einem der Ansprüche 1 bis 6 als Additive in Reinigerformulierungen zur Reinigung harter Oberflächen.

10. Verwendung der Oligoester gemäß einem der Ansprüche 1 bis 6 in Vollwaschmitteln, Feinwaschmitteln, Kolorwaschmitteln, Gardinenwaschmitteln, Wäscheweichspülern sowie Teppichreinigungs- und Imprägniermitteln.

11. Verwendung der Oligoester gemäß einem der Ansprüche 1 bis 6 in Haarbehandlungsmitteln.

## Claims

1. Amphiphilic, non-ion oligoesters that are free-flowing at ambient temperature, **characterized in that** the oligoesters are producable by conversion of
(A) 20 to 50 mole% of one or more dicarboxylic acid compounds,
(B) 10.1 to 29.9 mole% of one or more polyol compounds with at least three OH-groups,
(C) 10.1 to 50 mole% of one or more water-soluble alkylene oxide addition products of one or more C₂- to C₄-alkylene oxide to a C₁- to C₆-alcohol in a molar ratio of 4 to 100 alkylene oxide to 1 mole of alcohol, and
(D) 0 to 30 mole% of one of more diol compounds.

2. The oligoester according to claim 1, **characterized in that** 1 to 10 mole% of the diol compounds (D) are used.

3. The oligoester according to one of the preceding claims, **characterized in that** the alkylene oxide addition product (C) is an addition product of 4 to 40 moles, preferably 4 to 30 moles, ethylene oxide to methanol.

4. The oligoester according to one of the preceding claims, **characterized in that** the average-weight mole mass of the oligoester is less than 5000 g/mole.

5. The oligoester according to one of the preceding claims, **characterized in that** the average-weight mole mass lies between 2000 and 5000 g/mole.

6. The oligoester according to one of the preceding claims, **characterized in that** the average-weight mole mass of the alkylene oxide addition products (C) is less than 500 g/mole.

7. A detergent formulation containing 0.01 to 20 % by weight oligoester according to one of the preceding claims.

8. A concentrate containing 50 to 95 % oligoester according to one of claims 1 through 6 and further containing one or more of the following components: non-ionic surfactants, polyalkylene glycols, alkylene glycols, and water.

9. A use of the oligoester according to one of claims 1 through 6 as an additive in a detergent for cleaning hard surfaces.

10. The use of the oligoester according to one of claims 1 through 6 in all purpose detergents, fine detergents, color detergents, curtain detergents, water softening rinses, as well as carpet detergents and impregnating means.

11. The use of the oligoester according to one of claims 1 through 6 in a hair treatment agent.

## Revendications

1. Oligoesters non ioniques, amphiphiles, fluides à température ambiante, **caractérisés en ce que** les oligoesters peuvent être obtenus par la transformation de
(A) 20 à 50 % en mole d'un ou plusieurs composé(s) acide(s) dicarboxylique(s),
(B) 10,1 à 29,9 % en mole d'un ou plusieurs composé(s) polyol(s), présentant au moins 3 groupes OH,
(C) 10,1 à 50 % en mole d'un ou plusieurs produit(s) d'addition d'oxyde d'alkylène soluble(s) dans l'eau, d'un ou plusieurs oxyde(s) d'alkylène en C₁-C₄ sur un alcool en C₁-C₆, selon un rapport molaire de 4 à 100 moles d'oxyde d'alkylène pour 1 mole d'alcool et de
(D) 0 à 30 % en mole d'un ou de plusieurs composé(s) diol(s).

2. Oligoesters selon la revendication 1 , **caractérisés en ce qu'**on utilise 1 à 10 % en mole de composé diol (D).

3. Oligoesters selon l'une quelconque des revendications précédentes, **caractérisés en ce que** le produit d'addition d'oxyde d'alkylène (C) est un produit d'addition de 4 à 40 moles, de préférence de 4 à 30 moles d'oxyde d'éthylène, sur du méthanol.

4. Oligoesters selon l'une quelconque des revendications précédentes, **caractérisés en ce que** la masse molaire moyenne en poids des oligoesters est inférieure à 5 000 g/mole.

5. Oligoesters selon l'une quelconque des revendications précédentes, **caractérisés en ce que** la masse molaire moyenne en poids se trouve entre 2 000 et 5 000 g/mole.

6. Oligoesters selon l'une quelconque des revendications précédentes, **caractérisés en ce que** la masse molaire moyenne en poids du produit d'addition d'oxyde d'alkylène (C) est inférieure à 500 g/mole.

7. Formulation de nettoyage contenant 0,01 à 20 % en poids d'oligoester selon l'une quelconque des revendications précédentes.

8. Concentré contenant 50 à 95 % d'oligoester selon l'une quelconque des revendications 1 à 6 et, en outre, un ou plusieurs des composants cités ci-après : tensioactifs non ioniques, polyalkylèneglycols, alkylèneglycols et eau.

9. Utilisation des oligoesters selon l'une quelconque des revendications 1 à 6 comme additifs dans des formulations de nettoyage pour le nettoyage de surfaces dures.

10. Utilisation des oligoesters selon l'une quelconque des revendications 1 à 6 dans des lessives toutes températures, dans des lessives pour linge délicat, dans des lessives pour linge de couleur, dans des lessives pour rideaux, dans des produits de rinçage adoucissants pour linge ainsi que dans des produits de nettoyage pour tapis et dans des produits d'imprégnation.

11. Utilisation des oligoesters selon l'une quelconque des revendications 1 à 6 dans des produits de traitement capillaire.
